# EUROPEAN PATENT SPECIFICATION

(11) **EP 1 453 318 B1**
(45) Date of publication and mention of the grant of the patent: **21.09.2005**
(21) Application number: 04003642.8
(22) Date of filing: 18.02.2004
(51) Int. Cl.: H04N 7/18, G03B 39/00

(54) **High speed photographic system and synchronous photography timing controller**
System für Hochgeschwindigkeitsfotografie und photographisches Steuergerät
Système photographique à haute vitesse et contrôleur de synchronisation du déclenchement

(30) Priority: 28.02.2003 JP 2003053104
(43) Date of publication of application: 01.09.2004
(73) Proprietor: Shimadzu Corporation, Kyoto-fu 604-8511 (JP); Etoh, Takeharu, Osaka-fu, 562-0022 (JP)
(72) Inventor: Tominaga, Hideki, Shimadzu Corporation, Kyoto-shi Kyoto-fu, 604-8511 (JP); Soya, Hideki, Shimadzu Corporation, Kyoto-shi Kyoto-fu, 604-8511 (JP); Kondo, Yasushi, Shimadzu Corporation, Kyoto-shi Kyoto-fu, 604-8511 (JP); Etoh, Takeharu, Minoo-shi Osaka-fu, 562-0022 (JP)
(74) Representative: Pohlmann, Eckart

(56) References cited:
- EP-A- 0 474 483
- EP-A- 1 049 333
- US-A- 6 157 409
- US-B1- 6 463 215

## Description

### BACKGROUND OF THE INVENTION

### (1) Field of the Invention

This invention relates to a photographic apparatus having a plurality of cameras such as video cameras, and a synchronous photography timing controller for use with this apparatus. More particularly, the invention relates to a technique for photographing, by synchronizing a plurality of cameras, subjects in the fields of scientific measurement including fast moving bodies such as rockets, explosions, turbulences, electric discharge, movement of microbes under a microscope, and signal transfer of the brain and nervous system.

### (2) Description of the Related Art

A conventional high-speed photographic apparatus with high-speed video cameras is capable of performing a series of photographic operations at an extremely high speed, e.g. high-speed photography for obtaining 100 photographs successively at very short intervals. The term "photographing speed" used in this specification represents the number of frames per unit time (the unit being frames per second). A specific example of photographing speed herein is in the order of 1 million frames per second. The term "photographing interval" used herein represents a time taken in photographing one frame, i.e. time per unit frame (the unit being seconds per frame). A specific example of photographing interval is in the order of one millionth second (1µS) per frame. Thus, photographing speed is the inverse of photographing interval. With such high-speed photography it is possible to photograph successively a photographic subject whose state changes continuously within a very short time (e.g. a phenomenon occurring at a moment of explosion).

It is also possible to perform high-speed photography by synchronizing a plurality of video cameras. For example, a plurality of video cameras have color filters of different wavelength characteristics attached to lenses that take in optical images of a photographic subject. These cameras may be synchronized to perform high-speed photography, to photograph a photographic subject simultaneously by lights of different wavelengths.

For high-speed photography performed by synchronizing a plurality of video cameras, an external trigger signal (high-speed photography start signal) transmitted from outside to the video cameras for starting high-speed photography. The trigger signal may be transmitted to the video cameras simultaneously in a parallel mode, or successively in a serial mode.

However, a conventional high-speed photographic apparatus noted above may fail to synchronize the plurality of cameras accurately when performing high-speed photography.

No serious problem is caused by inaccurate synchronization in time of low photographing speed. In particular, the cameras cannot be synchronized accurately in time of photographing speed close to an upper limit (maximum photographing speed).

In the case of video cameras used in synchronous photography, each camera has a separate internal clock signal for controlling progress of a photographic sequence when picking up an image for one frame. There is no relationship between the internal clock signals of the video cameras. Thus, the video cameras are out of step with one another in progress of the photographic sequence.

In the former mode of transmitting an external trigger signal to the video cameras in parallel when performing synchronous photography, the external trigger signal is supplied separately without being coordinated. Besides, the parallel supply of the external trigger signal gives no solution to the lack of a correspondence between the internal clock signals. The video cameras remain out of step with one another in progress of the photographic sequence. That is, the video cameras cannot be synchronized accurately, with the stages in the photographic sequence at a given time not being in full agreement for all of the video cameras.

In the latter mode of transmitting an external trigger signal to the video cameras in series when performing synchronous photography, the state of the photographic sequence is indefinite at a time of receiving the trigger signal from an upstream video camera. This results in variations in the time from receipt of the external trigger signal to start of high-speed photography, depending on the state of the photographic sequence when the downstream video camera receives the external trigger signal. Thus, accurate synchronization is impossible in this case also.

### SUMMARY OF THE INVENTION

This invention has been made having regard to the state of the art noted above, and its object is to provide a photographic apparatus capable of performing photography with a plurality of cameras synchronized accurately, and a synchronous photography timing controller for use with this apparatus.

The above object is fulfilled, according to this invention, by a photographic apparatus according to claim 8.

With the photographic apparatus according to this invention, when a plurality of cameras are synchronized to perform photography, the synchronous photography timing controller supplies each camera with the external clock signal, external reset signal and external trigger signal. Then, synchronous photography is performed as follows. When the external clock signal is supplied first, the photographic sequence control device starts repeating a photographic sequence for obtaining one photograph according to the external clock signal. When the external reset signal is supplied next, the photographic sequence control device of each camera resets the photographic sequence to return to a start state once. Then, when the external trigger signal is supplied, the photographic sequence control device causes the image pickup device of each camera to start an image pickup operation for high-speed synchronous photography.

Thus, in this invention, the single synchronous photography timing controller supplies the cameras for synchronous photography, with the external clock signal for controlling progress of a photographic sequence for obtaining a photograph, the external reset signal for resetting the photographic sequence, and the external trigger signal for causing each camera to start high-speed photography, all in a coordinated manner. A timewise corresponding relationship is maintained between the external clock signals and between the external reset signals being supplied in the coordinated manner. The external reset signals reset photographic sequences of the respective cameras, so that the photographic sequences also progress in a timewise corresponding relationship. Photographing operations of the cameras started by the external trigger signals supplied in the coordinated manner progress in a strictly timewise corresponding relationship. As a result, the plurality of cameras are synchronized accurately to perform photography.

The synchronous photography timing controller may supply the signals as follows, for example. The synchronous photography timing controller may supply the external clock signal, the external reset signal and the external trigger signal, each in phase without a time lag between the cameras.

When synchronous photography is performed with this construction, the cameras start repeating a photographic sequence for obtaining one photograph in step with each other, and reset the photographic sequence in step with each other. The photographic sequence progresses at the same pace between the cameras, and photography starts at the same time. In this way, photographic operations of the respective cameras may be performed simultaneously and in parallel.

In another example of supplying the signals, the synchronous photography timing controller may supply the external clock signal and the external reset signal, each in phase without a time lag between the cameras, and supply the external trigger signal with a phase difference between the cameras, which is a time lag corresponding to a time taken for each of the cameras to obtain a predetermined number of images successively.

When synchronous photography is performed with this construction, the cameras start repeating a photographic sequence for obtaining one photograph in step with each other, and reset the photographic sequence in step with each other. Subsequently, the trigger signal is supplied to each camera, with a time lag corresponding to a time taken for a preceding camera to obtain a predetermined number of images successively. With the trigger signal supplied in this way to one camera after another, the cameras successively perform continuous photography to obtain the predetermined number of images. Thus, images may be obtained continuously in number corresponding to a sum of the predetermined numbers of images obtained by the cameras.

In a further example of supplying the signals, the synchronous photography timing controller may supply at least the external reset signal and the external trigger signal such that each of the external reset signal and the external trigger signal has a phase difference between the cameras, which is a time lag corresponding to t ö N where t is a time taken to pick up one image and N is the number of cameras.

When synchronous photography is performed with this construction, as the external clock signal begins to be supplied, the cameras start repeating a photographic sequence for obtaining one photograph at each of photographing intervals. Then, the external reset signal is supplied with a time lag corresponding to [(photographing interval) ö (number of cameras)], which successively resets the photographic sequence of each camera to uniform progress of the photographic sequence. As the external trigger signal is supplied with the time lag corresponding to [(photographing interval) ö (number of cameras)], the cameras successively start photography. With the plurality of cameras seen as a whole, photography proceeds at photographing intervals of [(photography interval) ö (number of cameras)]. Thus, by setting photographing intervals to a minimum (i.e. maximum photographing speed), the maximum photographing speed can be increased by a multiple of the number of cameras.

In the invention described above, it is sufficient to supply the signals such that each of at least the external reset signal and the external trigger signal has a phase difference between the cameras, which is a time lag corresponding to t ö N. A signal other than the external reset signal and the external trigger signal (e.g. the external clock signal) may also be supplied to have the phase difference between the cameras, which is the time lag corresponding to t ö N.

With a view to avoiding a phase difference which is a time lag resulting from variations in the length of the electric cables, the synchronous photography timing controller, preferably, is connected to the cameras through electric cables of a substantially equal length for supplying the external clock signal, the external reset signal and the external trigger signal.

With this construction, the synchronous photography timing controller supplies the external clock signal, the external reset signal and the external trigger signal to the cameras through the electric cables of a substantially equal length. It is then possible to avoid a phase difference which is a time lag resulting from variations in the length of the electric cables, occurring in each external signal between the cameras.

In one example of photographic apparatus according to this invention, each of the cameras includes:
an internal clock generating device for generating an internal clock signal to control progress of a photographic sequence by the image pickup device; and
a clock switching device for switching clock signals supplied to the photographic sequence control device between the external clock signal and the internal clock signal.

With this construction, the clock switching device switches between the external clock signal and the internal clock signal. Thus, the photographic sequence of each camera may be performed according to the internal clock or external clock.

In another aspect of the invention, there is provided a synchronous photography timing controller according to claim 1.

Thus, the synchronous photography timing controller according to this invention may be used as a component of a photographic apparatus.

The various examples of construction according to this invention discussed hereinbefore in relation to the photographic apparatus are, where appropriate, applicable also to this synchronous photography timing controller.

### BRIEF DESCRIPTION OF THE DRAWINGS

For the purpose of illustrating the invention, there are shown in the drawings several forms which are presently preferred, it being understood, however, that the invention is not limited to the precise arrangement and instrumentalities shown.
Fig. 1 is a block diagram showing an outline of a high-speed photographic apparatus according to this invention;
Fig. 2 is a block diagram showing a construction of a camera included in the apparatus according to this invention;
Fig. 3 is a block diagram showing a construction of a synchronous photography timing controller according to this invention;
Fig. 4 is a flow chart showing a simultaneous parallel synchronous photographing process of the apparatus according to this invention;
Fig. 5 is a signal waveform diagram showing inputting of various external signals in time of simultaneous parallel photography;
Fig. 6 is a flow chart showing a relayed synchronous photographing process of the apparatus according to this invention;
Fig. 7 is a signal waveform diagram showing inputting of various external signals in time of relayed synchronous photography;
Fig. 8 is a flow chart showing a successive shift synchronous photographing process of the apparatus according to this invention; and
Fig. 9 is a signal waveform diagram showing inputting of various external signals in time of successive shift synchronous photography.

### DESCRIPTION OF THE PREFERRED EMBODIMENTS

A preferred embodiment of this invention will be described in detail hereinafter with reference to the drawings.

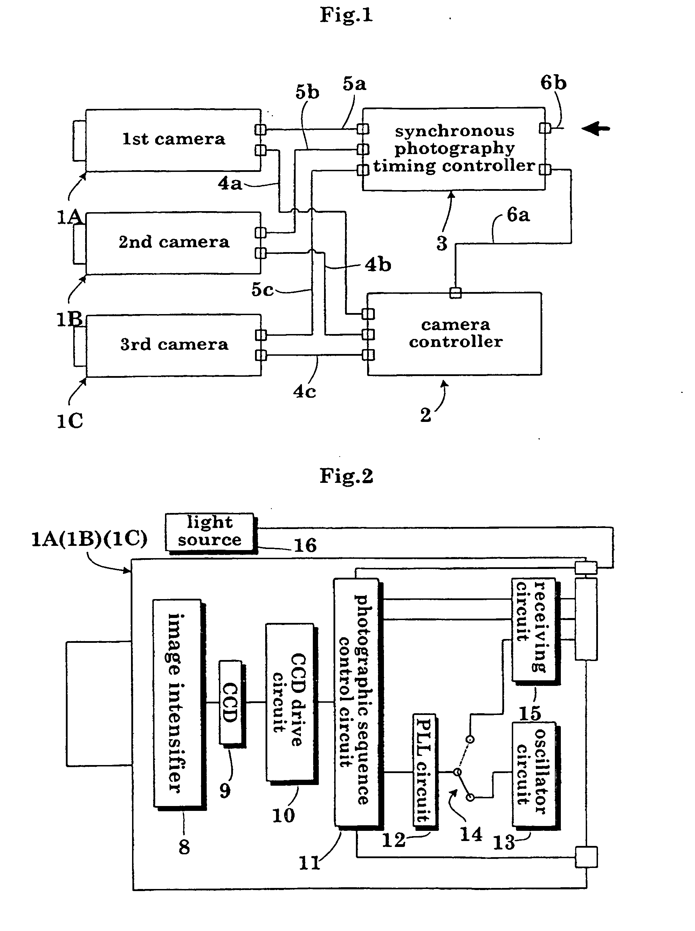

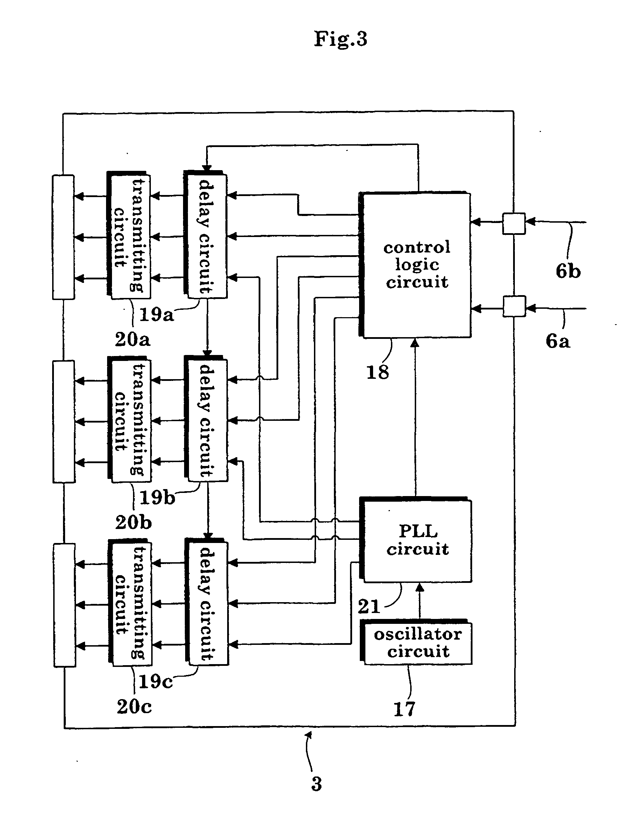

Fig. 1 is a block diagram showing an outline of a high-speed photographic apparatus according to this invention. Fig. 2 is a block diagram showing a construction of a camera included in the apparatus. Fig. 3 is a block diagram showing a construction of a synchronous photography timing controller included in the apparatus.

The high-speed photographic apparatus shown in Fig. 1 includes three, first to third, cameras 1A-1C, a camera controller 2, and a synchronous photography timing controller 3. The apparatus further includes electric cables 4a-4c, 5a-5c, 6a and 6b for transmission and reception of electric signals. The first to third cameras 1A-1C correspond to the cameras in this invention. The synchronous photography timing controller 3 corresponds to the synchronous photography timing controller in this invention.

The three, first to third, cameras 1A-1C are high-speed video cameras all having the same construction (hereinafter simply called cameras 1A-1C with the "first to third" omitted as appropriate). The camera controller 2 is operable by a photographer to input and set various photographic conditions for the cameras 1A-1C, such as the number of photographs to be taken, photographing intervals (photographing speed), an exposure time (shutter speed), photographic modes such as synchronous photography, and lighting conditions. The photographic conditions inputted to the camera controller 2 are transmitted and set to the cameras 1A-1C through corresponding electric cables 4a-4c, respectively.

The synchronous photography timing controller 3 is used when synchronous photography is carried out with two or more cameras. For expediency of description, it is assumed here that synchronous photography is carried out with the three cameras 1A-1C. The synchronous photography timing controller 3 is constructed to input to each of the cameras 1A-1C an external clock signal that governs a photographic sequence for obtaining one photograph, an external reset signal for resetting and returning the photographic sequence to a start state, and an external trigger signal for starting photography by each camera. The various signals are transmitted from the synchronous photography timing controller 3 to the cameras 1A-1C through the electric cables 5a-5c, respectively. In this embodiment, the electric cables 5a-5c all have substantially the same length (substantially equal in length).

The camera controller 2 is operable by the photographer to input and set also types of synchronous photography performed by the three cameras 1A-1C (e.g. simultaneous parallel photography, relayed photography and successive shift photography described in detail hereinafter) as optional photographic conditions. The synchronous photographic conditions set at the camera controller 2 also are transmitted and set to the cameras 1A-1C and synchronous photography timing controller 3 through corresponding electric cables 4a-4c and electric cable 6a, respectively. The synchronous photography timing controller 3 supplies the external clock signal, external reset signal and external trigger signal according to the set conditions. The cameras 1A-1C perform synchronous photography according to the set conditions, and in response to the external clock signal, external reset signal and external trigger signal supplied from the synchronous photography timing controller 3. In this embodiment, images obtained by synchronous photography are transferred to the camera controller 2 via electric cables 4a-4c at a suitable time, and the photo images received may be displayed on an image monitor (not shown) mounted on or provided separately from the camera controller 2. The construction of each component of the apparatus will be described in detail hereinafter.

As shown in Fig. 2, each camera 1A-1C includes an optical lens 7, an image intensifier 8, a solid-state CCD image sensor 9 (hereinafter "CCD"), a CCD drive circuit 10, a photographic sequence control circuit 11, a PLL circuit 12, an internal clock oscillator circuit 13, an input clock selector switch 14 and a receiving circuit 15. The CCD 9 and CCD drive circuit 10 correspond to the image pickup device in this invention. The photographic sequence control circuit 11 corresponds to the photographic sequence control device in this invention. A light source 16 is connected to each camera 1A-1C. This light source 16 is not absolutely necessary.

An optical image of a photographic subject taken in through the optical lens 7 is optically amplified by the optoelectronic amplifying function of the image intensifier 8, and is then projected to the CCD 9. This image intensifier 8 is used for sensitization by optical amplification, and for the purpose of shielding the CCD by a shutter function based on on-off switching of the gate. An ordinary mechanical shutter may be used instead where sensitization is unnecessary.

The CCD 9 has a group of photodiodes for photoelectric conversion of the optical image, and a group of charge transfer elements. The CCD 9 has functions to perform a photoelectric conversion of the optical image for output as electric signals, and to act as a shutter when charges resulting from the photoelectric conversion are stored or read. Furthermore, the CCD 9 has an image store (not shown), which can hold a finite number of (e.g. 100) photo images. In time of high-speed photography, the image store successively collects and stores photo images at set photographing intervals under control of the CCD drive circuit 10. The photo images stored in the image store are promptly transferred to the camera controller 2 at a predetermined time such as after a photographing operation.

The photographing intervals (photographing speed) in high-speed photography by the cameras 1A-1C are, for example, one millionth second (1µS) per frame (or about one million frames per second). However, this is not limitative of course.

In each camera 1A-1C, a 16MHz internal clock signal outputted from the internal clock oscillator circuit 13 and a 16MHz external clock signal supplied from outside the camera are inputted to the photographic sequence control circuit 11 after being changed into 32MHz by the PLL circuit 12. By switching action of the input clock selector switch 14, the clock to the photographic sequence control circuit 11 is switched between the external clock signal and internal clock signal. When the internal clock signal is inputted to the photographic sequence control circuit 11, the photographic sequence of the camera 1A-1C proceeds according to the internal clock. When the external clock signal is inputted to the photographic sequence control circuit 11, the photographic sequence of the camera 1A-1C proceeds according to the external clock. Thus, the internal clock oscillator circuit 13 corresponds to the internal clock generating device in this invention. The input clock selector switch 14 corresponds to the input clock switching device.

The receiving circuit 15 receives the external clock signal, external reset signal and external trigger signal transmitted from outside the camera, and inputs these signals to the photographic sequence control circuit 11. When lighting is required in time of photography, the light source 16 emits light under control of the photographic sequence control circuit 11 to illuminate the photographic subject.

Furthermore, the photographic sequence control circuit 11 controls the CCD 9 and CCD drive circuit 10 so that photography is performed repeatedly to obtain one photograph in a photographic sequence according to the internal clock signal or external clock signal. In response to the external reset signal supplied from outside the camera, the photographic sequence once returns to a start state. In response to the external trigger signal supplied from outside the camera, photography is started by the CCD 9 and CCD drive circuit 10.

As shown in Fig. 3, the synchronous photography timing controller 3 includes an oscillator circuit 17 for producing the 16MHz external clock signal, a control logic circuit 18 for controlling input timing of the external clock signal, external reset signal and external trigger signal, delay circuits 19a-19c for delaying these signals, transmitting circuits 20a-20c for transmitting the signals, and a PLL circuit 21. The control logic circuit 18 operates according to the clock signal changed into 32MHz by the PLL circuit 21 to input the external clock signal in 16MHz to each camera 1A-1C. A reduction of radiated noise is achieved by supplying each camera 1A-1C with the external clock signal in 16MHz, which is a half of 32MHz, required for the photographic sequence control circuit 11.

In the synchronous photography timing controller 3 in this embodiment, the external clock oscillator circuit 17 and delay circuits 19a-19c correspond to the clock signal supply device in this invention. The control logic circuit 18 and delay circuits 19a-19c correspond to both the reset signal supply device and the trigger signal supply device in this invention.

In this embodiment, the external clock signal, external reset signal and external trigger signal are supplied to the respective cameras 1A-1C through the electric cables 5a-5c having substantially the same length. It is thus possible to avoid a time lag in each of the external signals between the cameras due to variations in the length of the electric cables.

The construction of the synchronous photography timing controller 3 will particularly be described in connection with synchronous photography by the cameras 1A-1C. The apparatus in this embodiment is capable of selectively performing synchronous photography modes including simultaneous parallel synchronous photography, relayed synchronous photography and successive shift synchronous photography, which may be set through the camera controller 2. The synchronous photography is performed by the three cameras, for example, when the same view of a photographic subject is to be photographed simultaneously with lights of different wavelengths, when a photographic subject is to be photographed simultaneously from different directions, when obtaining photographs in number exceeding the number obtainable from continuous high-speed photography with one camera, or when photography is to be carried out at a speed exceeding a maximum photographing speed of one camera.

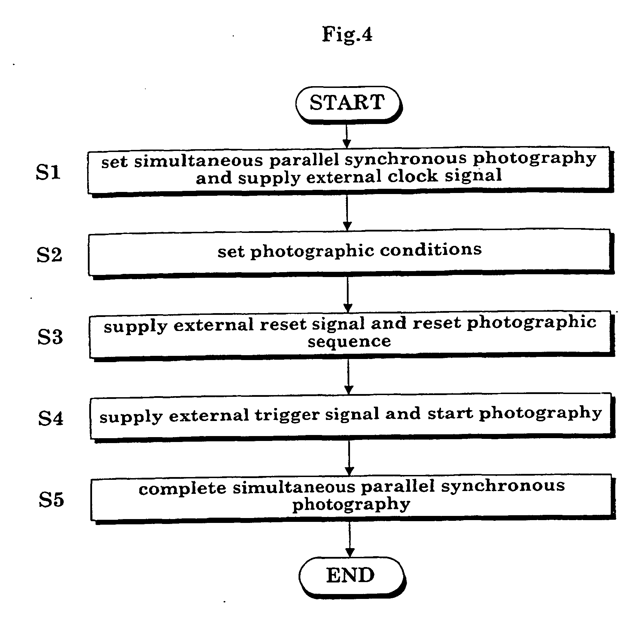

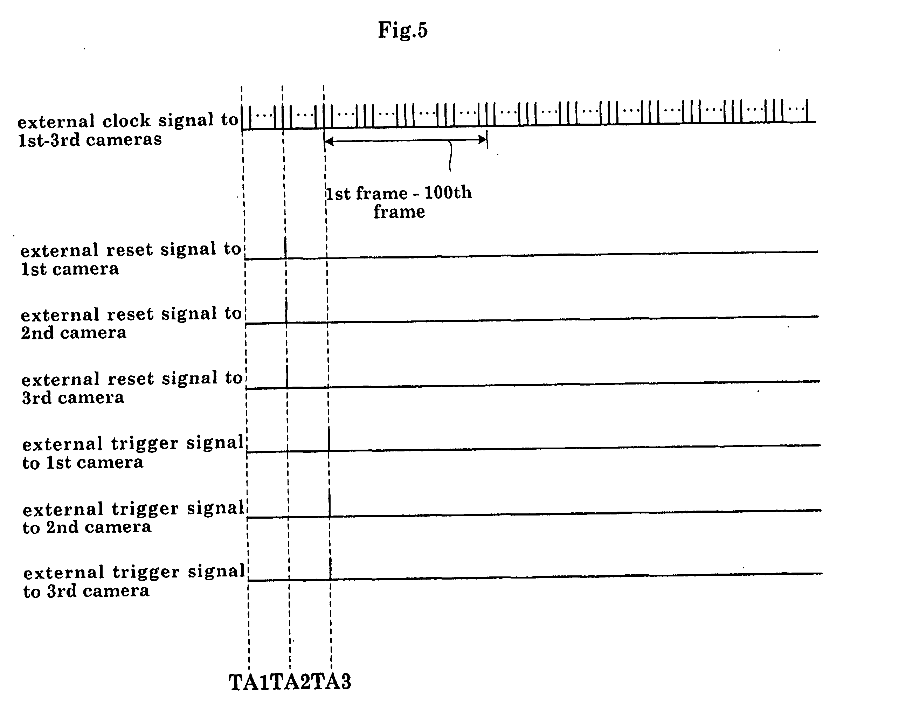

The simultaneous parallel synchronous photography will be described first. Fig. 4 is a flow chart showing a simultaneous parallel synchronous photographic process. Fig. 5 is a signal waveform diagram showing inputting of the various external signals in time of simultaneous parallel photography

### (Step S1) Set simultaneous parallel synchronous photography and supply external clock signal:

As conditions for simultaneous parallel synchronous photography are set from the camera controller 2, as shown in Fig. 5, the same external clock signal begins to be supplied continuously all at once at a point of time TA1 from the synchronous photography timing controller 3 to the cameras 1A-1C. At the same time, the input clock selector switch 14 in each camera 1A-1C operates to input the external clock signal to the photographic sequence control circuit 11. In response to the external clock signal, the photographic sequence control circuit 11 starts repeating a photographic sequence for obtaining one photograph. In this simultaneous parallel synchronous photography, the delay circuits 19a-19c do not operate but simply pass the external signals. Thus, no time lag occurs between the external signals supplied to the cameras 1A-1C.

### (Step S2) Set photographic conditions:

Photographic conditions such as the number of photographs and photographing intervals are set and transmitted to the cameras 1A-1C from the camera controller 2. Then, the cameras 1A-1C are placed on standby. It is assumed here that settings are made for 100 photographs and the maximum photographing speed.

### (Step S3) Supply external reset signal and reset photographic sequence:

As an external reset signal is supplied from the synchronous photography timing controller 3 simultaneously to the cameras 1A-1C at a point of time TA2 as shown in Fig. 5, the photographic sequence control circuits 11 reset and return the photographic sequences to the start state all at once. Since the timing of supplying the external clock signal to the photographic sequence control circuits 11 is the same, the photographic sequences proceed in perfect accord after the reset. The control logic circuit 18 performs controls so that the point of time TA2 for supplying the external reset signal is a predetermined time from the point of time for setting photographic conditions.

In this way, the external reset signal is supplied for each photographic operation to uniform photographic data obtained from the respective cameras 1A-1C. The reason for taking this measure is that the communication between each camera 1A-1C and camera controller 2 for transferring image data from each camera 1A-1C to the camera controller 2 after setting photographic conditions in step S2 or after a photographic operation is not necessarily completed at the same point of time because of retransmission or restoration of the data after a failure in their transmission or reception.

### (Step S4) Supply external trigger signal and start photography:

As an external trigger signal is supplied from the synchronous photography timing controller 3 simultaneously to the cameras 1A-1C at a point of time TA3 as shown in Fig. 5, the photographic sequence control circuits 11 cause the CCDs 9 and CCD drive circuits 10 to start photography all at once. The control logic circuit 18 performs controls so that the point of time TA3 for supplying the external trigger signal is a predetermined time from the point of time for setting photographic conditions, or coincides with a point of time when the synchronous photography timing controller 3 receives a photography start command signal (e.g. an explosion occurrence detection signal) from outside the cameras via the electric cable 6b.

### (Step S5) Complete simultaneous parallel synchronous photography:

High-speed photography progresses simultaneously and in parallel by the respective cameras 1A-1C to collect images for 100 frames in the image store of each CCD 9 for the first frame at start of photography up to the 100th frame. Thus, by simultaneous parallel synchronous photography, 300 photographs in total are obtained, three photographs per frame, for the first to 100th frames.

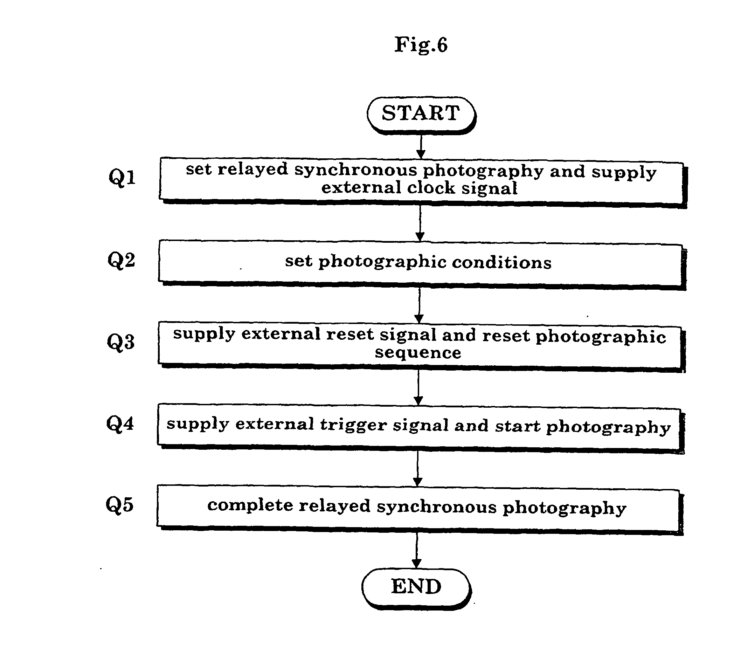

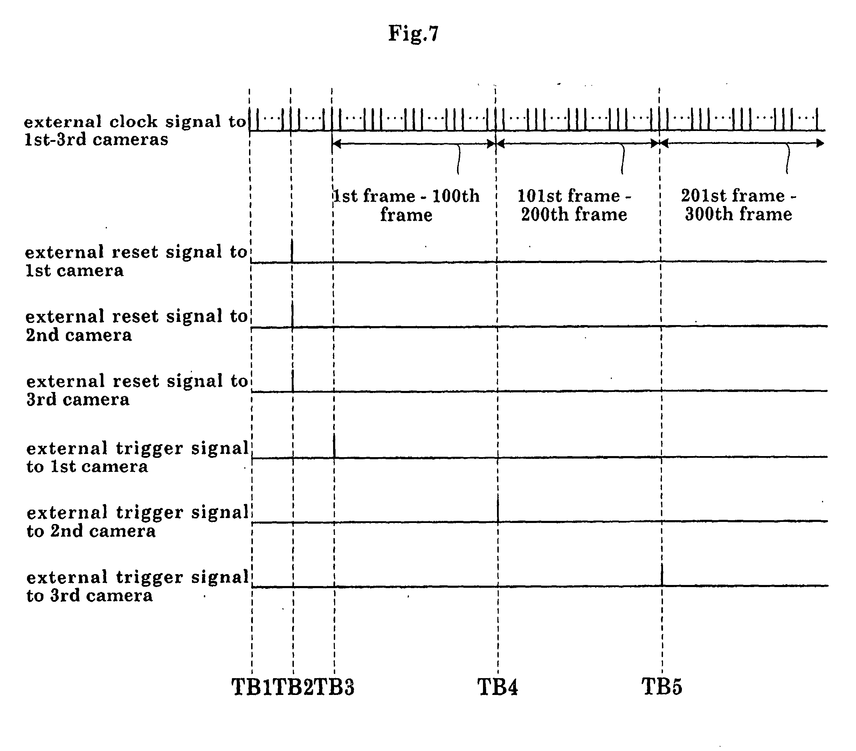

The relayed synchronous photography will be described next. Fig. 6 is a flow chart showing a relayed synchronous photographic process. Fig. 7 is a signal waveform diagram showing inputting of the various external signals in time of relayed synchronous photography

### (Step Q1) Set relayed synchronous photography and supply external clock signal:

As conditions for relayed synchronous photography are set from the camera controller 2, as shown in Fig. 7, the same external clock signal begins to be supplied continuously all at once at a point of time TB1 from the synchronous photography timing controller 3 to the cameras 1A-1C. At the same time, the input clock selector switch 14 in each camera 1A-1C operates to input the external clock signal to the photographic sequence control circuit 11. In response to the external clock signal, the photographic sequence control circuit 11 starts repeating a photographic sequence for obtaining one photograph. In this relayed synchronous photography also, the delay circuits 19a-19c do not operate but simply pass the external signals. No time lag occurs between the external signals supplied to each camera 1A-1C.

### (Step Q2) Set photographic conditions:

Photographic conditions such as the number of photographs and photographing intervals are set and transmitted to the cameras 1A-1C from the camera controller 2. Then, the cameras 1A-1C are placed on standby. It is assumed here that settings are made for 100 photographs and the maximum photographing speed.

### (Step Q3) Supply external reset signal and reset photographic sequence:

As an external reset signal is supplied from the synchronous photography timing controller 3 simultaneously to the cameras 1A-1C at a point of time TB2 as shown in Fig. 7, the photographic sequence control circuits 11 reset and return the photographic sequences to the start state all at once. Since the timing of supplying the external clock signal to the photographic sequence control circuits 11 is the same, the photographic sequences proceed in perfect accord after the reset. The control logic circuit 18 performs controls so that the point of time TB2 for supplying the external reset signal is a predetermined time from the point of time for setting photographic conditions.

### (Step Q4) Supply external trigger signal and start photography:

As an external trigger signal is supplied from the synchronous photography timing controller 3 to the camera 1A at a point of time TB3 as shown in Fig. 7, the camera 1A starts photography. As an external trigger signal is supplied to the camera 1B at a point of time TB4 when the camera 1A completes photography, the camera 1B starts photography. As an external trigger signal is supplied to the camera 1C at a point of time TB5 when the camera 1B completes photography, the camera 1C starts photography. The control logic circuit 18 performs controls so that the point of time TB3 for supplying the external trigger signal is a predetermined time from the point of time for setting photographic conditions, or coincides with a point of time when the synchronous photography timing controller 3 receives a photography start command signal (e.g. an explosion occurrence detection signal) from outside the cameras via the electric cable 6b. Further, the control logic circuit 18 performs controls so that each point of time TB4 or TB5 coincides with elapse of a time corresponding to the number of photographs (=100) × photographing intervals (about 1µS) = about 100µS for the camera 1A or 1B.

### (Step Q5) Complete relayed synchronous photography:

Photography is performed in a relay mode by the cameras 1A-1C as described above. The first camera 1A collects a total of 100 photographs, one for each of the first frame at start of photography to the 100th frame. The second camera 1B collects a total of 100 photographs, one for each of the 101st frame to the 200th frame. The third camera 1C also collects a total of 100 photographs, one for each of the 201st frame to the 300th frame. Thus, 300 photographs in total are obtained by continuous photography at the maximum photographing speed with the three cameras 1A-1C.

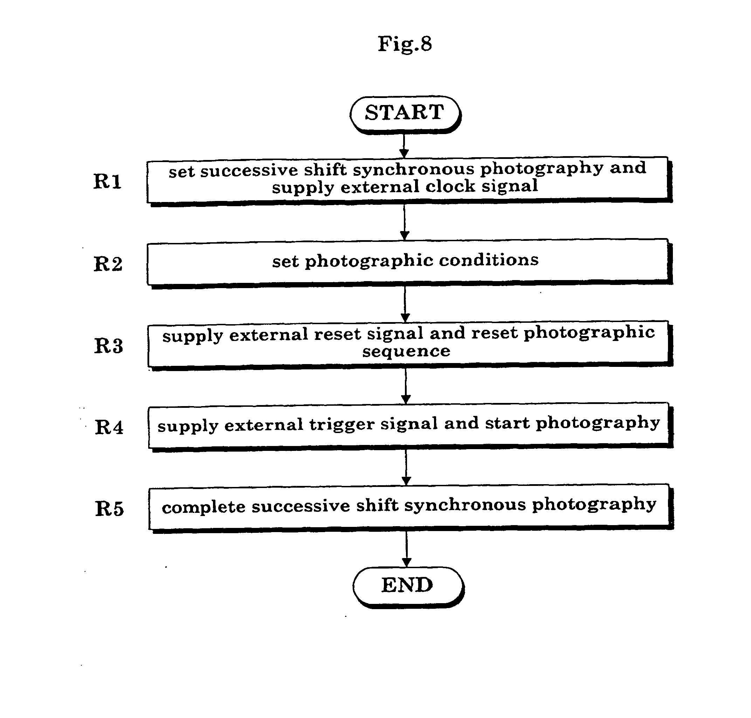

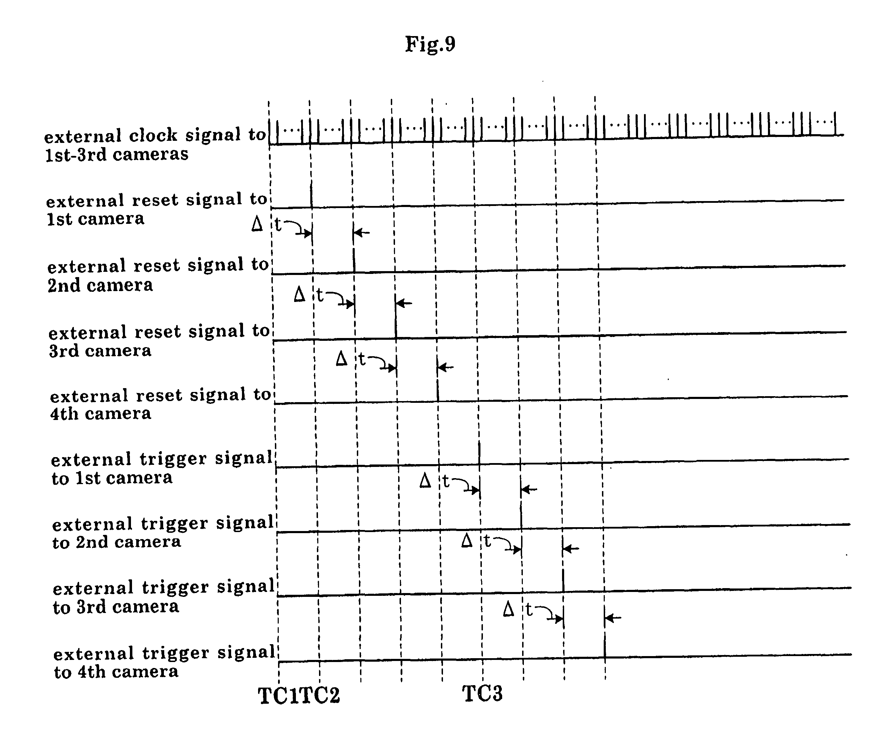

Finally, the successive shift synchronous photography will be described. For expediency of description, it is assumed here that four cameras 1A-1D are used in the successive shift synchronous photography. Fig. 8 is a flow chart showing a successive shift synchronous photographic process. Fig. 9 is a signal waveform diagram showing inputting of the various external signals in time of successive shift synchronous photography.

### (Step R1) Set successive shift synchronous photography and supply external clock signal:

As conditions for successive shift synchronous photography including the number of cameras to be used are set from the camera controller 2, as shown in Fig. 9, the external clock signal begins to be supplied at a point of time TC1 from the synchronous photography timing controller 3 to the cameras 1A-1D. At the same time, the input clock selector switch 14 in each camera 1A-1D operates to input the external clock signal to the photographic sequence control circuit 11. In response to the external clock signal, the photographic sequence control circuit 11 starts repeating a photographic sequence for obtaining one photograph.

In this successive shift synchronous photography, the delaying function of delay circuits 19a-19d causes the external reset signal and external trigger signal supplied to have a time lag (phase difference) or delay time Δt set between the cameras 1A-1D of [(photographing interval) ö 4 (number of cameras) = 1/4 photographing interval = 0.25µS].

### (Step R2) Set photographic conditions:

Photographic conditions such as the number of photographs and photographing intervals are set and transmitted to the cameras 1A-1D from the camera controller 2. Then, the cameras 1A-1D are placed on standby. It is assumed here that settings are made for 100 photographs and the maximum photographing speed.

### (Step R3) Supply external reset signal and reset photographic sequence:

An external reset signal is supplied from the synchronous photography timing controller 3 to the camera 1A at a point of time TC2 as shown in Fig. 9. Subsequently, an external reset signal is supplied with the delay time At to the camera 1B. Further, an external reset signal is supplied with the delay time Δt to the camera 1C. With these reset signals inputted, each photographic sequence is reset and the photographic sequence progresses with the delay time Δt from one to the other of the cameras 1A-1D. The control logic circuit 18 performs controls so that the point of time TC2 for supplying the external reset signal also is a predetermined time from the point of time for setting photographic conditions. The control logic circuit 18 controls also the delay time Δt for the external trigger signals according to the number of cameras.

### (Step R4) Supply external trigger signal and start photography:

As an external trigger signal is supplied to the camera 1A at a point of time TC3 as shown in Fig. 9, the camera 1A starts photography. Then, as an external trigger signal is supplied with the delay time Δt to the camera 1B, the camera 1B starts photography. As an external trigger signal is supplied with a further delay time Δt to the camera 1C, the camera 1C starts photography. As an external trigger signal is supplied with a further delay time Δt to the camera 1D, the camera 1D starts photography. The control logic circuit 18 performs controls so that the point of time TC3 for supplying the first external trigger signal is a predetermined time from the point of time for setting photographic conditions, or coincides with a point of time when the synchronous photography timing controller 3 receives a photography start command signal (e.g. an explosion occurrence detection signal) via the electric cable 6b. The control logic circuit 18 controls also the delay time At for the external trigger signals according to the number of cameras.

### (Step R5) Complete successive shift synchronous photography:

The cameras 1A-1D continue photography while maintaining the delay time Δt, to give way to a next camera every delay time Δt. That is, 400 photographs are obtained, with four photographs for each of the first to 100th frames, obtained at the intervals of delay time Δt. Since the maximum photographing speed is set, this high-speed photography is performed four times as fast as the maximum speed.

In this embodiment, as described above, the single synchronous photography timing controller 3 solely supplies all of the external clock signal, external reset signal and external trigger signal in a coordinated way to each of the cameras 1A-1C for performing synchronous photography. A timewise corresponding relationship is maintained between the external clock signals and between the external reset signals supplied to the respective cameras 1A-1C. Thus, the photographic sequences reset by the external reset signals proceed in a timewise corresponding relationship. Since the cameras 1A-1C start high-speed photography in response to the external trigger signals supplied in a coordinated way, the high-speed photographing operations of the cameras 1A-1C also proceed in a strict timewise corresponding relationship. As a result, the three cameras 1A-1C may be synchronized accurately to perform high-speed photography.

Furthermore, when the single synchronous photography timing controller 3 supplies the external clock signal, external reset signal and external trigger signal in the above embodiment, the external reset signal and external trigger signal may be generated and supplied at proper times based on the external clock signal (or a basic clock signal forming the basis for generating the external clock signal) generated within the synchronous photography timing controller 3. Thus, the photographic sequence and high-speed photography by each camera may be synchronized on a high level. It may be said that accurate synchronization is achieved also for synchronous photography on an ultra high-speed level.

The apparatus in the above embodiment is capable of performing synchronous photography in any of the simultaneous parallel, relayed parallel and successive shift modes with the three cameras 1A-1C (the successive shift synchronous photography being performed with the four cameras 1A-1D). Thus, the apparatus can perform high-speed synchronous photography that meets the purposes of photography.

Each camera 1 and camera controller 3 may be interconnected directly, with the synchronous photography timing controller 3 removed, for use as an ordinary camera. In this way, the apparatus may serve as a highly versatile camera.

This invention is not limited to the above embodiment, but may be modified as follows:
(1) In the apparatus in the described embodiment, the camera controller 2 and synchronous photography timing controller 3 are separate components. A modified apparatus may have the camera controller 2 and synchronous photography timing controller 3 integrated into one, or integrated with the cameras 1A-1C as well.
(2) In the foregoing embodiment, each of the cameras 1A-1C is constructed to project optical images of a photographic subject to the CCD 9 through the image intensifier 8. Instead, optical images of a photographic subject may be projected directly to the CCD 9.
(3) The foregoing embodiment includes three or four cameras, which perform synchronous photography. This invention is not limited to the three or four cameras for performing synchronous photography, but may provide any number of cameras, i.e. two or more cameras.
(4) In the foregoing embodiment, successive shift synchronous photography is carried out with four cameras 1A-1D, the external clock signal at 32MHz (31.25nS), and photographing intervals of 1µS per frame. Where three cameras 1A-1C are used as in the simultaneous parallel synchronous photography or relayed synchronous photography, synchronization with the external clock signal will result in lags with the delay time Δt.
   That is, where four cameras 1A-1D are used, a time lag of [(photographing interval) ö 4 (number of cameras) = 1/4 photographing interval = 0.25µS] occurs between the cameras 1A-1D. Synchronization with the external clock signal is possible since the delay time Δt is clock pulse interval x integer (0.25µS = 31.25nS × 8 in the case of four cameras 1A-1D). However, in the case of cameras 1A-1C, a time lag of [(photographing interval) ö 3 (number of cameras) = 1/3 photographing interval = approximately 0.33µS] occurs between the cameras 1A-1C. The delay time Δt cannot be expressed by clock pulse interval × integer
   In this case, the external clock signal may also be deferred by the delay time Δt. Thus, the three delay circuits 19a-19c may be operated to produce a time lag (phase difference) between the external clock signals supplied to the cameras 1A-1C. That is, the delaying function of the delay circuits 19a-19c causes the external clock signal supplied to have a time lag (phase difference) or delay time Δt set between the cameras 1A-1C of [(photographing interval) ö 3 (number of cameras) = 1/3 photographing interval = approximately 0.33µS]. For the external reset signal and external trigger signal also, the delay circuits 19a-19c are operated to produce the delay time Δt.
(5) For the successive shift synchronous photography in the foregoing embodiment, the external reset signal and external trigger signal supplied are given the time lag or delay time Δt of [photographing interval ö number of cameras] between the cameras. Synchronous photography may be carried out by successively switching the cameras every photographing interval t, with each camera operating at [photographing intervals] × [number of cameras], i.e. Nxt where each camera has photographing intervals t and the number of cameras is N. Where, for example, photographing intervals are 1µS per frame and the number of the camera is four (N= 4), synchronous photography may be carried out by extending the photographing intervals to 4µS for each camera, and successively switching the cameras every microsecond.
(6) The apparatus in the foregoing embodiment may be programmed to change photographic conditions and photographing intervals in the course of a photographing operation of one camera. In the case of photographing an explosion of a balloon, for example, minute photographing intervals are required immediately after the explosion when rapid changes occur, but after a while changes become somewhat slack and the photographing intervals need not be minute. Thus, the apparatus may be programmed to change the photographing intervals from 1µS per frame immediately after the explosion to about 1 millisecond per frame for one camera. Where the three cameras are used, photographic conditions for each camera may be varied such that a photography start command signal (e.g. an explosion occurrence detection signal) is used as the external trigger signal to cause the cameras 1A and 1B to operate at photographing intervals of 1µS per frame, and the camera 1C to operate at photographing intervals of 1 millisecond per frame.
(7) In the foregoing embodiment, the photographing intervals are about one millionth second (1µS) per frame (or about one million frames per second). The invention is applicable also to a photographic apparatus that performs photography at a video rate (about 0.033 seconds per frame), i.e. 30 frames per second.

## Claims

1. A synchronous photography timing controller for use in a photographic apparatus having a plurality of cameras (1A,1B,1C) and one synchronous photography timing controller (3), each of said cameras having (a) image pickup means (a) for taking in optical images of a photographic subject, carrying out a photoelectric conversion thereof, and outputting the images as electric signals for forming photo images, and (b) a plotographic sequence control circuit (11) for controlling the image pickup means to repeat a photographic sequence for obtaining an photograph according to an external clock signal supplied from outside the cameras, to reset the photographic sequence to return to a start state in response to an external reset signal supplied from outside the cameras, and to start photography in response to an external trigger signal supplied from outside the cameras, said synchronous photography timing controller (3) comprising:
clock signal supply means for supplying the external clock signal to each of the cameras;
reset signal supply means for supplying the external reset signal to each of the cameras; and
trigger signal supply means for supplying the external trigger signal to each of the cameras;
whereby synchronous photography is performed with said plurality of cameras (1A,1B,1C) according to the external clock signal, the external reset signal and the external trigger signal supplied from said synchronous photography timing controller (3).

2. A synchronous photography timing controller as defined in claim 1, wherein the external clock signal, the external reset signal and the external trigger signal are supplied, each in phase without a time lag between the cameras.

3. A synchronous photography timing controller as defined in claim 1, wherein the external clock signal and the external reset signal are supplied, each in phase without a time lag between the cameras, and the external trigger signal is supplied with a phase difference between the cameras, which is a time lag corresponding to a time taken for each of the cameras to obtain a predetermined number of images successively.

4. A synchronous photography timing controller as defined in claim 1, wherein at least the external reset signal and the external trigger signal are supplied such that each of the external reset signal and the external trigger signal has a phase difference between the cameras, which is a time lag corresponding to t ö N where t is a time taken to pick up one image and N is the number of cameras.

5. A synchronous photography timing controller as defined in claim 1, wherein the external trigger signal is supplied to the cameras upon lapse of a predetermined time from setting of photographic conditions.

6. A synchronous photography timing controller as defined in claim 1, wherein the external trigger signal is supplied to the cameras at a point of time when said synchronous photography timing controller receives an explosion occurrence detection signal on occurrence of an explosion.

7. A synchronous photography timing controller as defined in claim 4, wherein the external clock signal has the phase difference between the cameras, which is the time lag corresponding to t ö N.

8. A photographic apparatus having a plurality of cameras and one synchronous photography timing controller (3), according to any of claims 1 to 7.

9. A photographic apparatus as defined in claim 8, wherein the synchronous photography timing controller is connected to the cameras through electric cables of a substantially equal length for supplying the external clock signal, the external reset signal and the external trigger signal.

10. A photographic apparatus as defined in claim 8, wherein each of the cameras includes:
internal clock generating means for generating an internal clock signal to control progress of a photographic sequence by said image pickup means; and
clock switching means for switching clock signals supplied to said photographic sequence control means between the external clock signal and the internal clock signal.

11. A photographic apparatus as defined in claim 8, wherein each of the cameras includes an image intensifier having an optoelectronic amplifying function and for adjusting on-off switching, said image pickup means being a solid-state CCD image sensor, said optical images of the photographic subject being projected to said solid-state CCD image sensor after an optical amplification by the optoelectronic amplifying function of said image intensifier.

12. A photographic apparatus as defined in claim 8, wherein said image pickup means is a solid-state CCD image sensor, said optical images of the photographic subject being projected directly to said solid-state CCD image sensor.

## Patentansprüche

1. Fotografiesynchronzeitsteuerung zur Verwendung in einer fotografischen Vorrichtung, die eine Vielzahl von Kameras (1A, 1B, 1C) und eine Fotografiesynchronzeitsteuerung (3) aufweist, wobei jede Kamera (a) eine Bildaufnahmeinrichtung zum Aufnehmen optischer Bilder eines fotografischen Motivs, zum Durchführen einer fotoelektrischen Umwandlung der optischen Bilder und zum Ausgeben der Bilder in Form von elektrischen Signalen zur Bildung von Fotobildern und (b) eine fotografische Folgesteuerschaltung (11) zum Steuern der Bildaufnahmeeinrichtung aufweist, um eine fotografische Abfolge zum Erzielen einer Fotografie nach Maßgabe eines äußeren Taktsignals zu wiederholen, das den Kameras von außen zugeführt wird, die fotografische Abfolge zum Zurückkehren zum Ausgangszustand auf ein äußeres Rücksetzsignal zurückzusetzen, das von außen den Kameras zugeführt wird, und die Fotografie auf ein äußeres Auslösesignal zu beginnen, das den Kameras von außen zugeführt wird, welche Fotografiesynchronzeitsteuerung (3)
eine Taktsignalzuführungseinrichtung zum Zuführen des äußeren Taktsignals zu jeder der Kameras;
eine Rücksetzsignalzuführungseinrichtung zum Zuführen des äußeren Rücksetzsignals zu jeder der Kameras; und
eine Auslösesignalzuführungseinrichtung zum Zuführen des äußeren Auslösesignals zu jeder der Kameras umfasst;
wobei eine Synchronfotografie mit der Vielzahl von Kameras (1A, 1B, 1C) nach Maßgabe des äußeren Taktsignals, des äußeren Rücksetzsignals und des äußeren Auslösesignals erfolgt, die von der Fotografiesynchronzeitsteuerung (3) zugeführt werden.

2. Fotografiesynchronzeitsteuerung nach Anspruch 1, bei der das äußere Taktsignal, das äußere Rücksetzsignal und das äußere Auslösesignal jeweils phasengleich ohne Zeitverzögerung zwischen den Kameras zugeführt werden.

3. Fotografiesynchronzeitsteuerung nach Anspruch 1, bei der das äußere Taktsignal und das äußere Rücksetzsignal jeweils phasengleich ohne Zeitverzögerung zwischen den Kameras zugeführt werden und das äußere Auslösesignal mit einem Phasenunterschied zwischen den Kameras zugeführt wird, der gleich einer Zeitverzögerung ist, die der Zeit entspricht, die jede der Kameras benötigt, um eine bestimmte Anzahl von Bildern nacheinander aufzunehmen.

4. Fotografiesynchronzeitsteuerung nach Anspruch 1, bei der wenigstens das äußere Rücksetzsignal und das äußere Auslösesignal so zugeführt werden, dass das äußere Rücksetzsignal und das äußere Auslösesignal jeweils eine Phasenunterschied zwischen den Kameras haben, der gleich einer Zeitverzögerung ist, die t ö N entspricht, wobei t die Zeit ist, die zum Aufnehmen eines Bildes benötigt wird, und N die Anzahl der Kameras ist.

5. Fotografiesynchronzeitsteuerung nach Anspruch 1, bei der das äußere Auslösesignal den Kameras nach Ablauf eines bestimmten Zeitintervalls ab der Festlegung der fotografischen Bedingungen zugeführt wird.

6. Fotografiesynchronzeitsteuerung nach Anspruch 1, bei der das äußere Auslösesignal den Kameras zu einem Zeitpunkt zugeführt wird, an dem die Fotografiesynchronzeitsteuerung ein Explosionserfassungssignal beim Auftreten einer Explosion empfängt.

7. Fotografiesynchronzeitsteuerung nach Anspruch 4, bei der das äußere Taktsignal einen Phasenunterschied zwischen den Kameras hat, der gleich der Zeitverzögerung ist, die t ö N entspricht.

8. Fotografische Vorrichtung mit einer Vielzahl von Kameras und einer Fotografiesynchronzeitsteuerung (3) nach einem der Ansprüche 1 bis 7.

9. Fotografische Vorrichtung nach Anspruch 8, bei der die Fotografiesynchronzeitsteuerung mit den Kameras über elektrische Leitungen mit im Wesentlichen gleicher Länge zum Zuführen des äußeren Taktsignals, des äußeren Rücksetzsignals und des äußeren Auslösesignals verbunden ist.

10. Fotografische Vorrichtung nach Anspruch 8, bei der jede der Kameras
eine interne Takterzeugungseinrichtung zum Erzeugen eines internen Taktsignals zur Steuerung des Fortschritts einer fotografischen Abfolge durch die Bildaufnahmeeinrichtung; und
eine Taktschalteinrichtung zum Umschalten der Taktsignale, die der die fotografische Abfolge steuernden Einrichtung zugeführt werden, zwischen dem äußeren Taktsignal und dem internen Taktsignal aufweist.

11. Fotografische Vorrichtung nach Anspruch 8, bei der jede der Kameras einen Bildverstärker mit einer optoelektronischen Verstärkungsfunktion und zur Ein-/Ausschalteinstellung aufweist, wobei die Bildaufnahmeinrichtung ein CCD-Festkörperbildsensor ist, und die optischen Bilder des fotografischen Motivs auf den CCD-Festkörperbildsensor nach einer optischen Verstärkung durch die optoelektronische Verstärkungsfunktion des Bildverstärkers projiziert werden.

12. Fotografische Vorrichtung nach Anspruch 8, bei der die Bildaufnahmeinrichtung ein CCD-Festkörperbildsensor ist, wobei die optischen Bilder des fotografischen Motivs direkt auf den CCD-Festkörperbildsensor projiziert werden.

## Revendications

1. Appareil de commande, synchronisation de photographie synchrone devant être utilisé dans un appareil photographique ayant une pluralité de chambres de prise de vues (1A, 1B, 1C) et un dispositif de commande de synchronisation de photographie synchrone (3), chacune desdites chambres ayant (a) des moyens de prise de vues (a) pour prendre des images optiques d'un sujet photographique, effectuer une conversion photoélectrique de celles-ci, et transmettre les images sous forme de signaux électriques pour former des images photographiques, et (b) un circuit de commande de séquences photographiques (11) pour commander les moyens de prise de vues pour qu'ils répètent une séquence photographique pour obtenir une photographie selon un signal d'horloge externe fourni depuis l'extérieur des chambres, réinitialiser la séquence photographique pour retourner à un état de départ en réponse à un signal de réinitialisation externe fourni depuis l'extérieur des chambres, et commencer la photographie en réponse à un signal de déclenchement externe fourni depuis l'extérieur des chambres, ledit dispositif (3) de commande de synchronisation de photographie synchrone comprenant :
des moyens de fourniture de signal d'horloge, pour fournir le signal d'horloge externe à chacune des chambres ;
des moyens de fourniture de signal de réinitialisation pour fournir le signal de réinitialisation externe à chacune des chambres ; et
des moyens de fourniture de signal de déclenchement pour fournir le signal de déclenchement externe à chacune des chambres ;
moyennant quoi une photographie synchrone est réalisée avec ladite pluralité de chambres (1A, 1B, 1C) selon le signal d'horloge externe, le signal de réinitialisation externe et le signal de déclenchement externe fournis par ledit dispositif (3) de commande de synchronisation de photographie synchrone.

2. Appareil selon la revendication 1, dans lequel le signal d'horloge externe, le signal de réinitialisation externe et le signal de déclenchement externe sont fournis, chacun en phase sans décalage entre les chambres.

3. Appareil selon la revendication 1, dans lequel au moins le signal d'horloge externe et le signal de réinitialisation externe sont fournis, chacun en phase sans décalage entre les chambres, et le signal de déclenchement externe est fourni avec une différence de phase entre les chambres, qui est un décalage correspondant à un temps mis par chacune des chambres pour obtenir un nombre prédéterminé d'images successives.

4. Appareil selon la revendication 1, dans lequel au moins le signal de réinitialisation externe et le signal de déclenchement externe sont fournis de telle sorte que chacun du signal de réinitialisation externe et du signal de déclenchement externe, présente une différence de phase entre les chambres, qui est un décalage correspondant à t ö N, où t est un temps mis pour prendre une image et N est le nombre de chambres.

5. Appareil selon la revendication 1, dans lequel le signal de déclenchement externe est fourni aux chambres lorsqu'un temps prédéterminé est écoulé depuis le réglage des conditions photographiques.

6. Appareil selon la revendication 1, dans lequel le signal de déclenchement externe est fourni aux chambres lorsque ledit dispositif de commande de synchronisation de photographie synchrone reçoit un signal de détection d'occurrence d'explosion lors de l'occurrence d'une explosion.

7. Appareil selon la revendication 4, dans lequel le signal d'horloge externe présente une différence de phase entre les chambres, qui est le décalage correspondant à t ö N.

8. Appareil photographique ayant une pluralité de chambres de prise de vues et un dispositif (3) de commande, synchronisation de photographie synchrone selon l'une quelconque des revendications 1 à 7.

9. Appareil photographique selon la revendication 8, dans lequel le dispositif de commande, synchronisation de photographie synchrone est connecté aux chambres par le biais de câbles électriques d'une longueur sensiblement égale pour fournir le signal d'horloge externe, le signal de réinitialisation externe et le signal de déclenchement externe.

10. Appareil photographique selon la revendication 8, dans lequel chacune des chambres comprend :
des moyens de génération d'horloge interne pour générer un signal d'horloge interne pour commander la progression d'une séquence photographique par lesdits moyens de prise de vues ; et
des moyens de commutation d'horloge pour commuter les signaux d'horloge fournis auxdits moyens de commande de séquence photographique entre le signal d'horloge externe et le signal d'horloge interne.

11. Appareil photographique selon la revendication 8, dans lequel chacune des chambres comprend un intensificateur d'image ayant une fonction d'amplification optoélectronique et pour ajuster la commutation marche-arrêt, lesdits moyens de prise de vues étant un capteur d'image CCD à semi-conducteurs, lesdites images optiques du sujet photographique étant projetées vers ledit capteur d'image CCD à semi-conducteurs après une amplification optique par la fonction d'amplification optoélectronique dudit intensificateur d'image.

12. Appareil photographique selon la revendication 8, dans lequel lesdits moyens de prise de vues sont un capteur d'image CCD à semi-conducteurs, lesdites images optiques du sujet photographique étant projetées directement vers ledit capteur d'image CCD à semi-conducteurs.
